# EUROPEAN PATENT SPECIFICATION

(11) **EP 3 261 841 B1**
(45) Date of publication and mention of the grant of the patent: **17.03.2021**
(21) Application number: 16709956.3
(22) Date of filing: 23.02.2016
(51) Int. Cl.: C04B 35/622, C03B 19/06, C03B 32/00, B29C 64/165, B28B 1/00, B33Y 10/00, B33Y 70/00

(54) **ADDITIVE MANUFACTURING PROCESSES FOR MAKING TRANSPARENT 3D PARTS FROM INORGANIC MATERIALS**
VERFAHREN ZUR GENERATIVEN FERTIGUNG ZUR HERSTELLUNG TRANSPARENTER 3D-TEILE AUS ANORGANISCHEN MATERIALIEN
PROCÉDÉS DE FABRICATION ADDITIVE POUR FABRIQUER DES PARTIES EN 3D TRANSPARENTES À PARTIR DE MATÉRIAUX INORGANIQUES

(30) Priority: 26.02.2015 US 201562121006 P
(43) Date of publication of application: 03.01.2018
(73) Proprietor: Corning Incorporated, Corning, New York 14831 (US)
(72) Inventor: LEREBOULLET, Jean-Pierre Henri Rene, 77590 Bois le Roi (FR); PRASSAS, Michel, 77300 Fontainebleau (FR)
(74) Representative: Elkington and Fife LLP
(86) International application number: PCT/US2016/019075
(87) International publication number: WO 2016/137956

(56) References cited:
- WO-A1-2015/006697
- DE-A1-102011 082 873
- US-B1- 6 596 224
- KOTZ ET AL.: "rapid prototyping of glass microfluidic chips", PROCEEDINGS SPIE9320 MICROFLUIDICS, BIOMEMS, AND MEDICAL MICROSYSTEMS XIII, 932993 (MARCH 5, 2015), vol. 9320, 7 February 2015 (2015-02-07), XP002757419, DOI: 10.1117/12.2076964
- GERALD MITTERAMSKOGLER ET AL: "Light curing strategies for lithography-based additive manufacturing of customized ceramics", ADDITIVE MANUFACTURING, vol. 1-4, 1 October 2014 (2014-10-01), pages 110-118, XP055270910, ISSN: 2214-8604, DOI: 10.1016/j.addma.2014.08.003
- GRIFFITH M L ET AL: "FREEFORM FABRICATION OF CERAMICS VIA STEREOLITHOGRAPHY", JOURNAL OF THE AMERICAN CERAMIC SOCIETY, BLACKWELL PUBLISHING, MALDEN, MA, US, vol. 79, no. 10, 1 October 1996 (1996-10-01), pages 2601-2608, XP000639344, ISSN: 0002-7820

## Description

### BACKGROUND

Additive manufacturing uses solid free-form fabrication (SFF) techniques to build or print a physical three-dimensional (3D) object from a computer-aided design (CAD) model of the object. Additive manufacturing is attractive because it can produce parts with complex geometries without complex tooling and with minimal production set-up time. Additive manufacturing works with solid, liquid, and powder materials. Therefore, in theory, if the part material can be provided in solid, liquid, or powder form, the part can be produced by additive manufacturing.

3D glass and glass-ceramic parts are currently being manufactured by processes such as molding and pressing. These processes require specialized tooling, such as molds, which can make it difficult to produce parts quickly. The more complex the geometry of the part, the longer and more expensive it will take to produce the part by traditional methods such as molding and pressing. For complex glass and glass-ceramic parts in short runs, additive manufacturing may be an attractive option.

Stereolithography (SLA), selective laser melting or sintering (SLM/SLS), and Three Dimensional Printing (3DP™) are examples of SFF techniques that may be used to build 3D glass and glass-ceramic parts. However, additive manufacturing processes using these techniques are currently not able to deliver fully transparent 3D printed glass and glass-ceramics due to difficulty in completely removing all the binder from the parts during the debinding step (in the case of SLA and 3DP™) and/or micro-bubbles trapped in the final sintered parts (in the case of SLA, SLM/SLS, and 3DP™). Lack of full transparency due to incomplete binder removal and/or trapped micro-bubbles may also be observed in other 3D parts printed from inorganic materials using these SFF techniques.

WO 2015/006697 A1 and US 6,596,224 relate to additive manufacturing processes for three-dimensional objects. Document US 6, 596, 224 discloses an manufacturing process for making transparent three-dimensional parts, comprising:forming a plurality of layers of inorganic material powder, the layers being formed one at a time under vacuum. Each current layer of powder is in contact with a previous layer of powder or with a support, wherein the inorganic material powder has a select particle size distribution. A structure containing a three-dimensional object is formed by selectively delivering droplets of a printing resin binder to each current layer of the inorganic material powder. A cross-section of the three-dimensional object is formed in the current layer of the inorganic material powder.

### SUMMARY

Additive manufacturing processes capable of making transparent 3D parts are disclosed herein. The invention is defined by a process in accordance with claim 1.

In one process not according to the invention, a printing material is disclosed having an inorganic material powder and a photocurable resin binder. The printing material may be in the form of a paste or slurry or liquid suspension. In a first bubble removal process vacuum processing is used to remove bubbles trapped in the printing material. The printing material is then used to build a 3D part. The building process involves sequentially forming layers of the printing material and printing a cross-section of the part in each layer by selective exposure of the layer to radiation. During the forming of each of the printing material layer the layers are exposed to a second bubble removing process. The built part is then subjected to debinding and sintering.

In the process of the invention, an inorganic material powder is formed into a layer under vacuum, and droplets of binder are delivered to the powder layer. The droplets of the binder may be delivered under vacuum. Several layers of the inorganic material powder are formed sequentially under vacuum, droplets of the binder are delivered to each layer, possibly under vacuum, and the resin binder is cured using a laser source until the part has been completely built. The built part may then be subjected to debinding and sintering.

By ensuring that there are no bubbles in the part through, for example, selective use of vacuum to remove or avoid trapped bubbles in the part and by adapting the debinding and sintering cycles to fully evaporate the binder from the part, a fully transparent dense part can be achieved by both processes.

The accompanying drawings are included to provide a further understanding of the invention and are incorporated in and constitute a part of this specification. The drawings illustrate various embodiments of the invention and together with the detailed description serve to explain the principles and operation of the invention.

### BRIEF DESCRIPTION OF THE DRAWINGS

The following is a description of the figures in the accompanying drawings. The figures are not necessarily to scale, and certain features and certain views of the figures may be shown exaggerated in scale or in schematic in the interest of clarity and conciseness.
FIG. 1 is a flowchart illustrating an additive manufacturing process for making a transparent 3D part not in accordance with the invention.
FIG.2 is a graph illustrating evolution of absolute pressure during a vacuum degassing cycle ;
FIGS. 3A-3C illustrate a method of building a 3D part using a printing material paste and stereolithography not accordint to the invention.
FIGS. 4A-4D illustrate a method of building a 3D part using a printing material slurry or liquid suspension and stereolithography; not according to the invention.
FIGS. 5A-5D illustrate a method of building a 3D part using a printing material slurry or liquid suspension and stereolithography; not according to the invention.
FIG. 6 is a flowchart illustrating an additive manufacturing process for making a transparent 3D part according to one embodiment.
FIGS. 7A-7C illustrate a method of building a 3D part according to another embodiment.

### DETAILED DESCRIPTION

In this disclosure, the term "bubbles" means air or gas bubbles. The term "micro-bubbles" means bubbles having a diameter smaller than 1 mm but larger than 1 µm. The term "essentially free of bubbles" or "essentially free of trapped bubbles" means at least free of micro-bubbles.

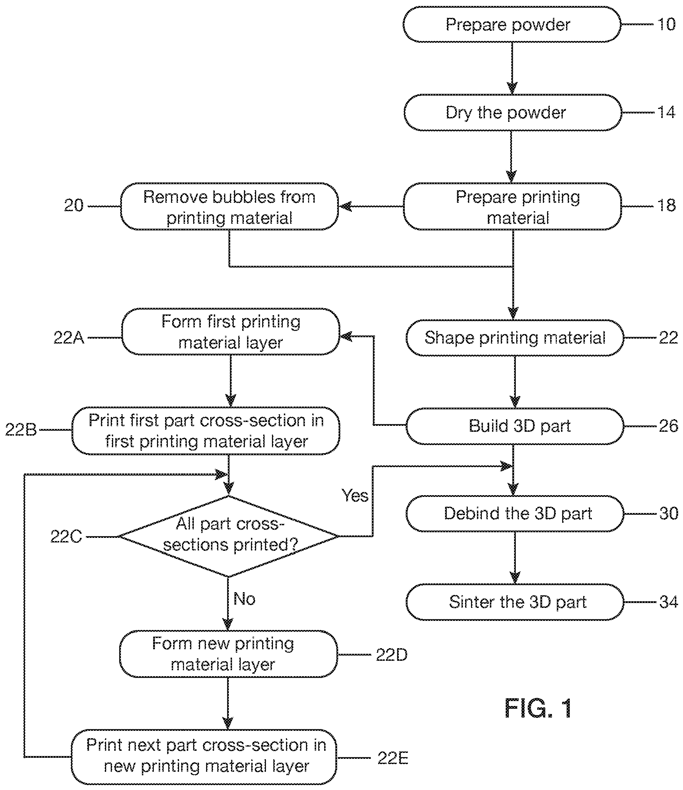

FIG. 1 illustrates an additive manufacturing process for making transparent 3D parts from inorganic materials. The 3D parts can have transparency in the visible range or in other ranges besides the visible range. For the visible range, a 3D part will be considered to be transparent if it has a transmittance of at least 80% in a range from 390 nm to 700 nm as measured by a spectrophotometer. The process of FIG. 1 involves preparing an inorganic material powder having a select particle size distribution (10). The composition of the inorganic material powder is a design variable and can be selected based on the desired characteristics of the final 3D part. In one aspect, the inorganic material powder may be a glass powder or a glass-ceramic powder. 3D parts made from glass and glass-ceramic materials can have transparency in the visible range as described above. In one aspect, the glass powder or glass-ceramic powder may have a composition for forming a part that can be subsequently chemically strengthened by an ion-exchange process. In another aspect, the inorganic material powder may be a ceramic powder. 3D parts made from ceramic materials may have transparency in other ranges besides the visible range, such as in the infrared range.

Any suitable method of preparing the inorganic material powder having the select particle size distribution while avoiding contamination of the powder may be used. In one aspect, the preparation may involve grinding and/or milling particulate feedstock having the desired composition of the inorganic material powder into finer particles. The ground and/or milled frit may be sifted and then passed through control granulometry to achieve the desired particle size distribution for the powder. The particle size distribution of the powder will be defined by the minimum size of the pattern and shape resolution that are required in the final 3D printed part. For example, the maximum particle size should be several times smaller than the minimum feature size that will be printed. In general, the particle sizes will be in the submicron to micron range. Typically, the median particle size (d₅₀) of the particle size distribution will be greater than 100 µm. Atomization process may also be used to form spherical particles of the inorganic material powder at a uniform constant size of less than 10 µm.

The process may include drying the inorganic material powder having the select particle size distribution (14). In one aspect, the powder maybe dried by vacuum drying. This may involve, for example, heating the powder well below melting and sintering temperatures and removing any vapor produced during the heating by a vacuum system.

The process includes mixing the inorganic material powder with a photocurable resin binder to form a printing material (18). In one aspect, the printing material is in the form of a paste. In another aspect, the printing material may be in the form of a slurry or liquid suspension. In one aspect, the process includes removing bubbles trapped inside the printing material under vacuum (20). The vacuum pressure under which the bubbles are removed from the printing material will be a design variable. One example may be vacuum pressure in a range from 1 mbar to 10 mbar. In one aspect, processing of the printing material under vacuum includes vacuum degassing of the printing material. The mixing of the inorganic material powder and photocurable resin binder to form the printing material (18) and the removal of bubbles trapped inside the printing material (20) may be carried out in a mixing system that is capable of vacuum and re-pressurization sequences. Mixing of the powder and binder to form the printing material (18) and vacuum processing of the printing material to remove trapped bubbles (20) may be carried out simultaneously, or vacuum processing of the printing material may be carried out during a final phase of the mixing.

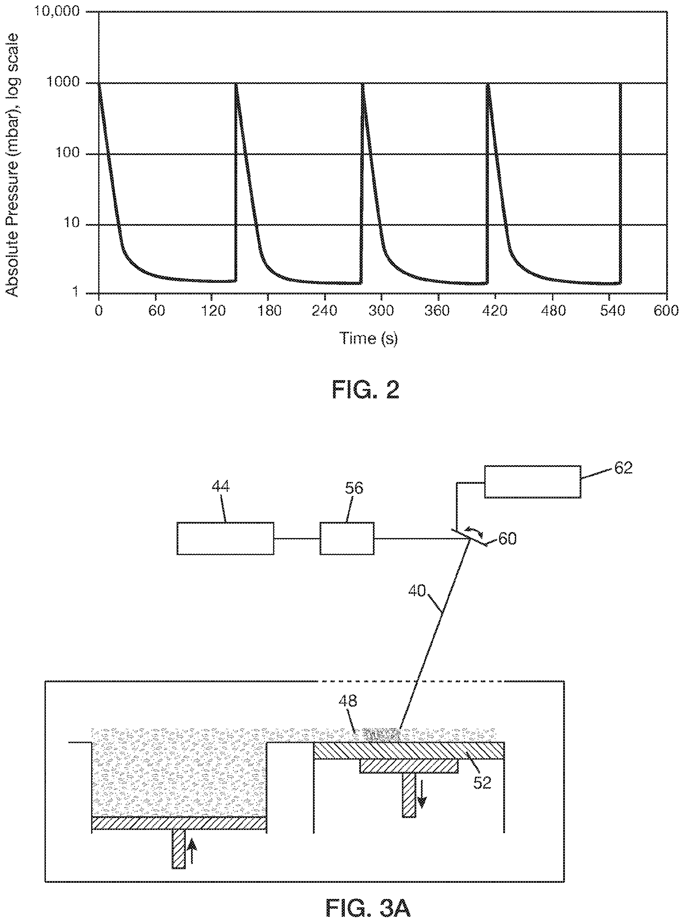

In one aspect, the materials to be mixed together are loaded into a vacuum mixer, i.e., a vacuum chamber that is adapted for mixing, such as centrifuge mixing or mechanical mixing using screws, blades, and the like. To avoid contamination of the printing material, the wall of the vacuum mixer and any tools that may come into contact with the printing material during the mixing may be coated with a non-reactive material such as Teflon® or silicone. Centrifuge mixing may be used in lieu of mechanical mixing with screws, blades, and the like to reduce potential contamination of the printing material. At a select time, such as during a final phase of mixing the materials in the vacuum mixer, a vacuum degassing procedure is applied to the printing material. One example of a vacuum degassing cycle is shown in FIG. 2. The vacuum degassing cycle in FIG. 2 is made of four generally identical sequences. Each sequence involves pumping under vacuum until 10 mbar absolute pressure is achieved in the chamber, followed by a dwell time of about 2 min 30 seconds when the vacuum level continues to go down to around 1.3 to 2 mbar, followed by violently pressurizing the chamber at atmospheric pressure (1,000 mbar) for a duration of about 0.2 seconds. The vacuum degassing cycle shown in FIG. 2 is an example and may be suitably adjusted to achieve a printing material that is essentially free of trapped bubbles.

In some aspects, the inorganic material powder and photocurable resin binder may be heated, for example, up to a temperature of about 100°C during the mixing. The heating may decrease the viscosity of the photocurable resin binder in order to promote uniform mixing of the inorganic material powder with the components of the photocurable resin binder. Such heating may not be needed if the photocurable resin binder is fluid at room temperature. Any vapor produced during the heating may be removed by vacuum degassing or other suitable method, such as heating the materials in a helium atmosphere. In FIG. 1, the printing material prepared as described above may be shaped into a form suitable for dispensing and forming a layer during printing of the 3D parts, such as in the form of rods or pellets in the case of printing material paste (22). Any shaping may be carried out under vacuum to avoid trapping new bubbles in the printing material.

The photocurable resin binder may include a resin, a photoinitiator, and one or more additives. The one or more additives may be selected to achieve one or more of a desired printing material rheology, stabilization of the printing material, and prevention of agglomeration of the material powder. In one aspect, the resin may be an oligomer selected from epoxy resin oligomers, unsaturated resin polyester resin oligomers, and acrylic resin oligomers. The photoinitiator is for triggering or stimulating polymerization of the resin when the printing material is exposed to actinic radiation, such as ultraviolet light. Photoinitiators can be of the radical type or cationic type. Examples of radical photoinitiators are trichloroacetophenones, benzophene, and benzil dimethyl ketal. Examples of cationic photoinitiators are ferrocenium salt, triarysulfonium salt, and diaryliodonium salt. If the photoinitiator is of the radical type, epoxy resin oligomer may be used. If the photoinitiator is of the cationic type, unsaturated polyester resin or acrylic resin oligomer may be used. In one aspect, for preparation of a printing material paste, natural or synthetic wax may be used as an additive in the photocurable resin binder. Examples of waxes are paraffin, beeswax, carnauba, and polyethylene wax. Additives may be selected from organic solvents, dispersants, surfactants and the like in the case of printing material slurry or liquid suspension.

The ratio in weight between the inorganic material powder, resin, photoinitiator, and additive(s) in the printing material may be selected such that there will be enough binder to enable contact between particles of the powder and sufficient open porosity to enable full removal of the binder during thermal cycles before final sintering of the particles together. One non-limiting example of a printing material paste is composed of 69.78% by volume of glass powder (made of 75% by weight silica, 22.7% by weight boric acid, 2.3% by weight potassium carbonate) mixed with 25.48% by volume of MX 4462 paraffin (from CERDEC FRANCE) and 4.70% by volume of CN2271 resin (from Sartomer, Exton, PA, USA) and 0.04% by volume of IRGACURE® photoinitiator (from BASF Corporation). In one aspect, the solid (particle) loading in the printing material may be in a range from 60% to 75% by volume. In another aspect, the solid loading may be in a range from 65% to 71% by volume. In general, the solid loading will be limited by the desired rheology of the printing material. The photoinitiator and resin in the printing material can be in a total amount of up to 5% by weight. The remainder of the printing material can be additive(s) to form the printing material into a paste or slurry or liquid suspension.

The process includes building a transparent 3D part from the printing material prepared as described above using a solid free-form fabrication (SFF) technique (26). Before building the 3D part, a model of the 3D part is built using a CAD software, such as PRO-ENGINEER or I-DEAS. The CAD software will typically output a .stl file, which is a file containing a tessellated model of the 3D part. A tessellated model is an array of triangles representing the surfaces of the CAD model. The .stl file contains the coordinates of the vertices of these triangles and indices indicating the normal of each triangle. The tessellated model is sliced into layers using a slicing software, such as MAESTRO from 3D Systems. The slicing software outputs a build file containing information about each slice or layer of the tessellated model. The information about each slice or layer contains the necessary geometric data to build a cross-section of the part. The build file is then sent to a SFF machine to build the 3D part. Newer generation CAD software may be able to output a build file directly from the CAD model, eliminating the need for a separate slicing software, or may be able to "print" the build data directly to a suitable SFF machine.

In one aspect, the 3D part is built using a modified stereolithography technique. As illustrated in FIG. 1, the part may be built by spreading, or otherwise depositing, a layer of the printing material (printing material layer) on a build platform (22A) and printing a cross-section of the part in the printing material layer by exposure of select areas of the printing material layer to radiation (22B). The information contained in the build file for the corresponding layer of the part will be used to determine the select areas of the printing material layer to expose to radiation. A determination is made whether there are more cross-sections of the part to be built (22C). If there are more cross-sections, a new printing material layer is spread, or deposited, on the previous printing material layer (22D), and the next cross-section of the part is printed in the new layer (22E). These steps (22C, 22D, 22E) are repeated until all the cross-sections of the part have been printed in corresponding printing material layers. The layer thickness of the printing material layers will typically be in the submicron to micron range, e.g., few nanometers up to 200 µm.

According to the modified stereolithography technique, to achieve a fully transparent final 3D part, each printing material layer should be at least free of micro-bubbles, and preferably free of all bubbles. It is implicit that the printing material layer that is free of micro-bubbles is also free of bubbles larger than micro-bubbles. If there are any bubbles in the printing material layer, preferably the bubble sizes are comparable to the smallest particle sizes in the printing material layer. There are two parts to achieving printing material layers that are at least free of micro-bubbles. The first part is forming of the printing material layers using the vacuum-processed printing material (from 20). The other part involves carrying out the forming (e.g., spreading or depositing) of each printing material layer in a manner to avoid trapping new bubbles in the printing material layer. One method for achieving this is to smooth out, i.e., push out, any new bubbles in the printing material layer using a doctor blade or similar blade tool. Another method for achieving this is to spread, or deposit, the printing material layer under vacuum, thereby avoiding incorporation of new bubbles in the printing material layer. Vacuum degassing may also be used as needed to remove trapped bubbles from the printing material layers. Vacuum degassing sequences such as shown in FIG. 2, or variations thereof, may be used selectively to remove bubbles from the printing material layers. One or more of smoothing out bubbles with a doctor blade, depositing or spreading under vacuum, and vacuum degassing may be used to maintain the printing material layers essentially free of bubbles. If vacuum processing will be used to remove bubbles from the printing material layers, the equipment used in spreading, or depositing, the printing material and the build platform used in holding the printing material layers may be enclosed in a vacuum chamber, which may have a capability for re-pressurization sequences. The vacuum chamber may have an access door that can be opened, or may have a transparent window, to allow the newest printing material layer on the build platform to be exposed to radiation from a suitable source. Alternatively, a separate vacuum environment may be provided for spreading the printing material layer, and the build platform holding the printing material layers may be transported between this separate vacuum environment and a station where the printing material layers are selectively exposed to radiation.

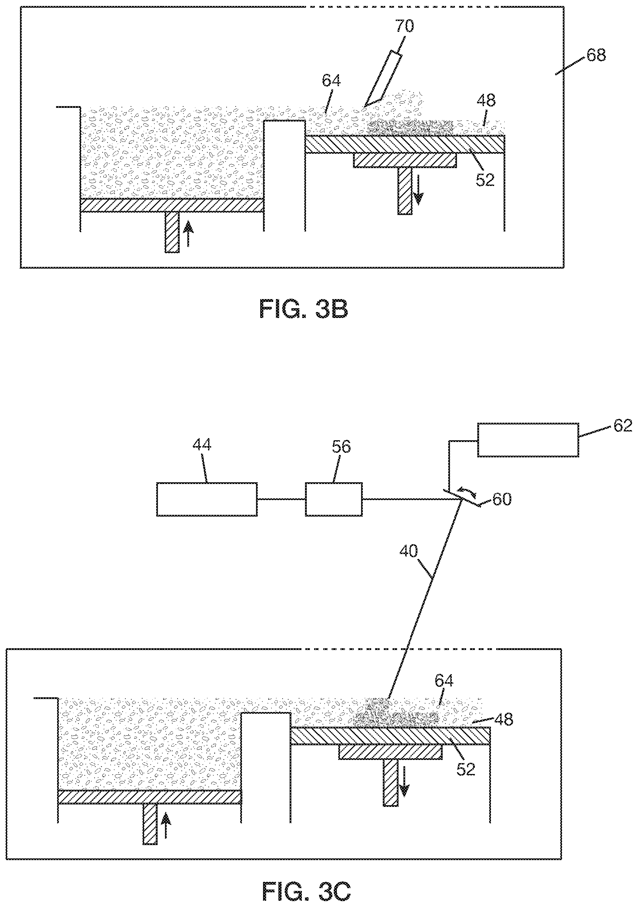

FIGS. 3A-3C illustrate one method for carrying out steps 22A-22E of FIG. 1. In this method, the printing material is provided as a paste. FIG. 3A shows a laser beam 40, from a laser source 44, focused onto a layer of printing material (printing material layer) 48 on a build platform 52 using, for example, a scanning mirror 60. (Although only mirror 60 is shown for illustration purposes, it is typical to have two mirrors, one of the X-axis, and the other for the Y-axis.) The laser beam 40 may pass through a beam shaper 56 prior to being focused onto the printing material layer by the scanning mirror 60. The laser beam 40 may be an ultraviolet laser beam or other suitable actinic radiation source, such as an infrared laser beam. The laser source 44 should operate at a range in which the inorganic material powder in the printing material is not absorbing. In one aspect, the laser source 44 operates in the 350 to 430 nm range. The laser beam 40 scans the surface of the printing material layer 48 according to the information contained in the build file for that layer. The build file may be provided to a controller 62, which may operate the scanning mirror 60 in order to position the laser beam 40 spot at desired locations on the printing material layer 48. In areas of the printing material layer 48 exposed to the laser beam 40, the radiation activates the photoinitiator in the printing material, which begins a chemical reaction that polymerizes and hardens the resin in the printing material. After the first cross-section of the 3D part has been formed in the first printing material layer 48, another printing material layer 64 is spread, or deposited, on the first printing material layer 48, as shown in FIG. 3B, using, for example, a doctor blade 70. As shown in FIG. 3C, the forming process is repeated for the next cross-section of the 3D part. During the forming process, hardened resin in the second printing material layer 64 will be linked with the hardened resin in the subjacent first printing material layer 48. This process of laying down a new printing material layer and forming a cross-section of the 3D part in the new layer is repeated until building of the part is complete. As shown in FIG. 3B, spreading, or depositing, of the printing material layers may be carried out in a vacuum chamber 68 to maintain the printing material layers essentially free of trapped bubbles. Although, as described above, it may be possible to maintain the printing material layers essentially free of trapped bubbles while spreading, or depositing, the printing material layers without use of vacuum.

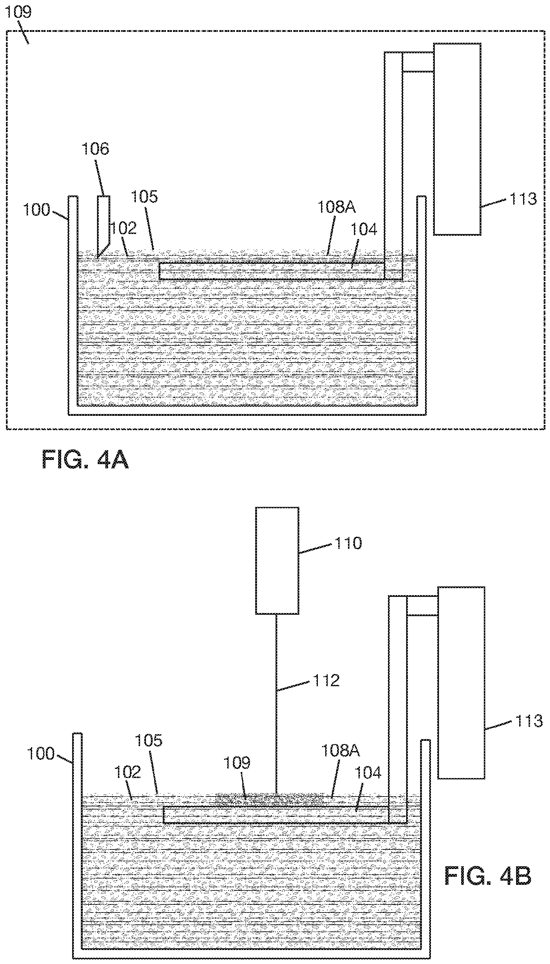

FIG. 4A illustrates another method for building a 3D part using stereolithography. In this method, the printing material is provided as a slurry or liquid suspension. FIG. 4A shows a vat 100 containing the printing material 102. A build platform 104 is located within the vat 100 and positioned below the surface 105 of the printing material such that a layer of the printing material 108A is formed on the build platform 104. A doctor blade 106 may be used to spread the printing material layer 108A uniformly on the build platform 104. The spreading of the printing material layer may be carried out in a vacuum chamber 109 to maintain the printing material layer essentially free of trapped bubbles. Vacuum degassing sequences such as shown FIG. 2, or variations thereof, may be used during the spreading of the printing material layer. In alternate aspects, it may not be necessary to spread the printing material layer under vacuum, or to use vacuum degassing, and the action of the doctor blade 106 may provide the desired avoidance of trapped bubbles in the printing material layer.

As shown in FIG. 4B, after the spreading of the printing material layer 108A is completed, an XY-scanning UV laser 110 then prints a first cross-section of the 3D part on the printing material layer 108A. "Printing" consists of scanning the printing material layer 108A with a laser beam 112 according to the information contained in the build file for that layer. As in the previous example of FIGS. 3A-3C, in areas of the printing material layer 108A exposed to the laser beam 112, the radiation activates the photoinitiator in the printing material, which begins a chemical reaction that polymerizes and hardens the resin in the printing material, thereby forming a structure 109 in the printing material layer 108A corresponding to the first cross-section of the 3D part.

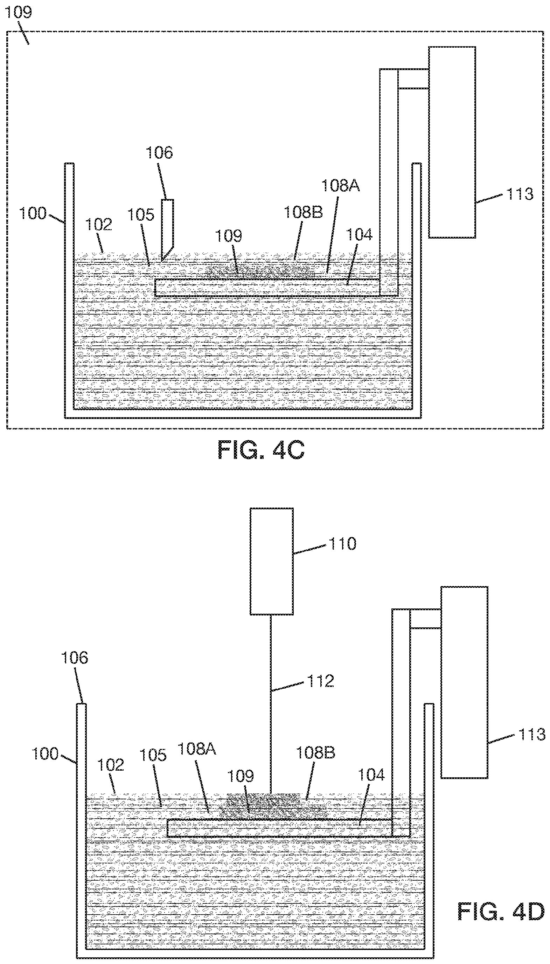

After the first cross-section of the 3D part has been formed in the printing material layer 108A, the build platform 104 (and the structure 109 formed thereon) is lowered within the vat 100, as shown in FIG. 4C, such that a new printing material layer 108B is formed on the first printing material layer 108A. Any suitable actuator 113 may be used to lower the build platform 104. The doctor blade 106 is again used to spread the new printing material layer 108B uniformly over the subjacent printing material layer 108A. In one aspect, lowering of the build platform 104 and spreading of the new printing material layer 108B may be carried out under vacuum to avoid trapping of bubbles in the new printing material layer 108B. As shown in FIG. 4D, the next cross-section of the 3D part is printed on the new printing material layer 108B. The hardened resin in the new printing material layer 108B will be linked with the structure 109 in the subjacent printing material layer 108A. This process of spreading a new printing material layer while avoiding trapping of bubbles in the layer and printing a new cross-section of the 3D part in the new printing layer is repeated until all the cross-sections of the 3D part have been printed.

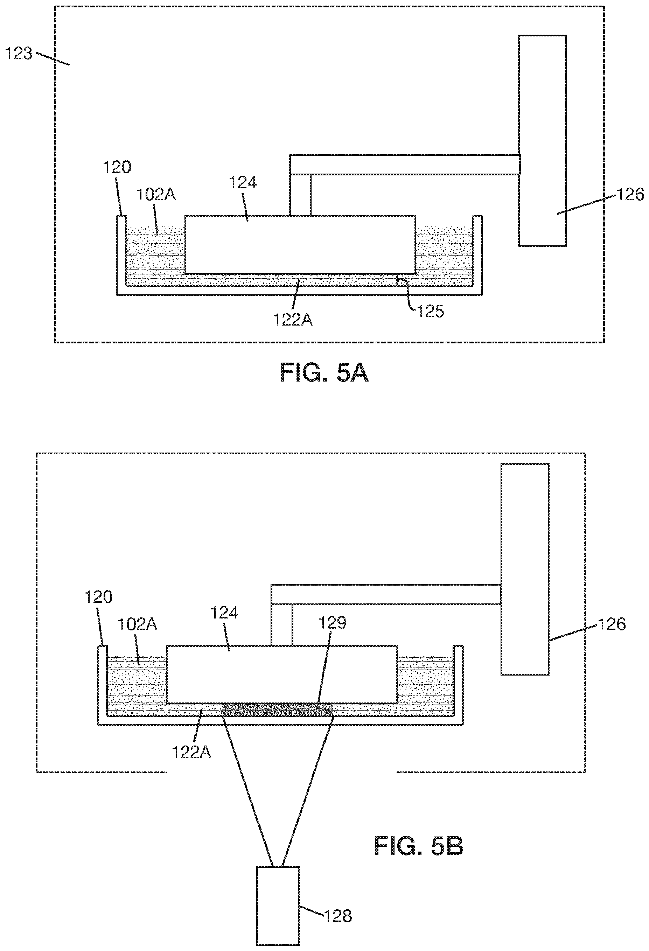

FIG. 5A illustrates another method for carrying out steps 22A-22E of FIG. 1. In this method, the printing material is provided as a slurry or liquid suspension. FIG. 5A shows an amount of the printing material 102A poured into a vat 120. An actuator 126 is used to position a build platform 124 a distance from the bottom of the vat 120. The gap 125 between the bottom of the vat 120 and the bottom of the build platform 124 determines the thickness of a first layer of printing material 122A. The pouring of the printing material 102A into the vat 120 and the positioning of the build platform 124 inside the vat 120 to form the first layer of printing material 122A may be carried out in a vacuum environment 123 to avoid trapping bubbles in the first layer of printing material 122A. If needed, vacuum degassing may be used to further ensure that the printing material layer 122A is essentially free of trapped bubbles.

Below the vat 120, as shown in FIG. 5B, is a UV Digital Light Processing (DLP) projector 128, which exposes the printing material layer 122A using a continuous layer mask (2D image). The UV DLP projector 128 is used to print a cross-section of the 3D part in the printing material layer 122A. (It should be noted that a UV laser may be used instead of a UV DLP for printing of the cross-section of the 3D part in the printing material layer 122A.) For the setup shown in FIG. 5B, the vat 120, at least in the bottom section, will need to be made of a suitable material to allow the light beams from the UV DLP projector 128 to pass through to the printing material layer 122A. In one aspect, the UV DLP projector 28 operates in the 350 nm to 430 nm range. The structure 129 built in the printing material layer 122A by selective exposure to radiation will adhere to the building platform 124. This may be accomplished by providing a suitable bottom surface of the building platform 124 for the structure 129 to adhere to.

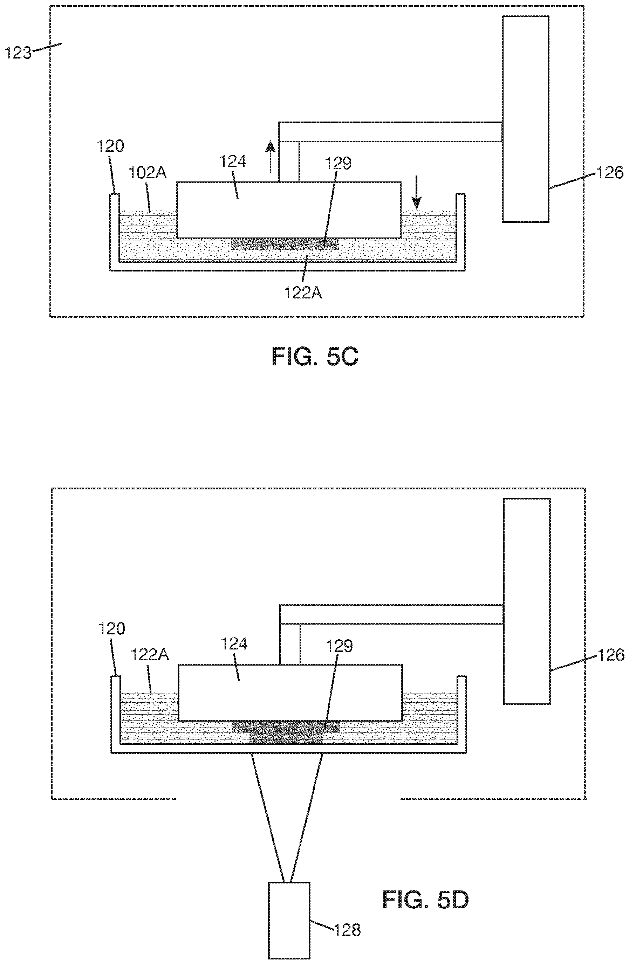

After the printing of a cross-section of the 3D part in the first printing material layer 122A is complete, the building platform 124 and the structure 129 will be raised by a height equal to the height of the next printing material layer 122B, as shown in FIG. 5C. The printing material 102A in the vat 120 will flow to fill the void created by raising the building platform 124 and structure 129 to form the next printing material layer 122C. The raising of the building platform 124 may be carried out in the vacuum environment 123 to avoid introduction, or trapping, of bubbles in the next printing material layer 122B due to movement of the printing material 102A within the vat 120. If needed, vacuum degassing may be used to further ensure that the next printing material layer 122B is essentially free of trapped bubbles. In FIG. 5D, the DLP projector 128 is then used to print the next cross-section of the 3D part in the new printing material layer 122B. This process (FIGS. 5C and 5D) may be repeated until all the cross-sections of the 3D part have been sequentially printed in printing material layers.

For all the methods described above, and variations thereof, steps in which motion can be imparted to the printing material, such as when spreading a new printing material layer on a previous printing layer or on a build platform, may be performed in a vacuum environment, which may involve vacuum degassing as needed, so as to avoid trapping of bubbles in the printing material layers. Vacuum degassing sequences such as shown FIG. 2, or variations thereof, may be used while in the vacuum environment. Also, it may be possible to avoid trapping of bubbles in the printing material layers without use of vacuum. For example, the possibility of using a doctor blade to smooth out bubbles in a printing layer has been described above. In addition, any means of "printing" a 2D image on a printing material layer, including those already described above, may be used in any of the methods described above.

Returning to FIG. 1, the process includes debinding the 3D part obtained from selective exposure of printing material layers to radiation (30). During the debinding, the binder materials will be removed from the part, leaving pores in the formed structure. The porous structure may be air cleaned after debinding to remove any remaining loose particles from the structure. The porous structure is then subjected to sintering to densify the part (34). For a 3D part built from ceramic powder, sintering may include ceramming the part. In one aspect, for a 3D part built from ceramic powder, sintering may include hot isostatic pressing. Hot isostatic pressing involves applying high pressure to the part while sintering the part. Hot isostatic pressing is commonly used to densify ceramic parts. Debinding and/or sintering may be carried out under vacuum, which may include selective vacuum degassing as needed, to avoid or remove bubbles trapped in the structure and further ensure a final part that is transparent. Vacuum pressures during debinding and sintering, if vacuum is used, will be design variables. As an example, vacuum pressures in the range of 1 mbar to 10 mbar may be used. Sintering may be carried out in a helium atmosphere, where the helium will remove gas inside any bubbles trapped in the structure, thereby collapsing the bubbles. This method may be used instead of vacuum processing or alternately with vacuum processing. Sintering may be carried out in a chlorine atmosphere, where the chlorine will remove any hydroxides in the structure, enabling a fully transparent part, at least in the case of glass parts. Sintering may be carried out in a combined helium and chlorine atmosphere, which would allow both collapsing of any bubbles trapped in the structure and removal of any hydroxides in the structure.

There will generally be a global shrinkage of 5 to 10% of the part as a direct effect of removing the binder from the part during debinding. This global shrinkage has to be accounted for in the initial CAD model of the 3D part such that after sintering the 3D part has the desired final dimensions. Also, depending on the shape/geometry of the 3D printed part, if the part is not able to support its own weight during sintering, all the shape may flow down. To avoid this, the space around the 3D part may be filled with a sintering aid, including but not limited to, alumina powder (or other sintering aid powder), alumina fibers (or other sintering aid fibers), and refractory cement before loading the 3D part into the sintering furnace. The sintering aid will support the 3D part and also absorb any residual binder in the 3D part during sintering. It is important that the sintering aid chosen will not decompose at the sintering temperatures. After sintering, the sintering aid, can be brushed off the part or otherwise removed from the part. Then, the part may be washed in an acid rinsing vat to remove any remaining sintering aid on the part and also to etch the surface of the part to achieve a final good transparency.

Both debinding and sintering are heat treatment processes carried out in suitable furnaces. The debinding and sintering cycles ramp and dwell times are defined based on differential thermal analysis, which can indicate the heat of the reaction and the weight variation during a thermal cycle. In general, debinding should be done with very slow thermal ramps, e.g., 1 to 2°C/min to heat the part as homogeneously as possible so that all the surfaces of the part have enough dwell times to ensure complete removal of the binder. The risk to manage here is to have enough time to evaporate the binder in the middle of the part before sintering of the particles in the part starts.

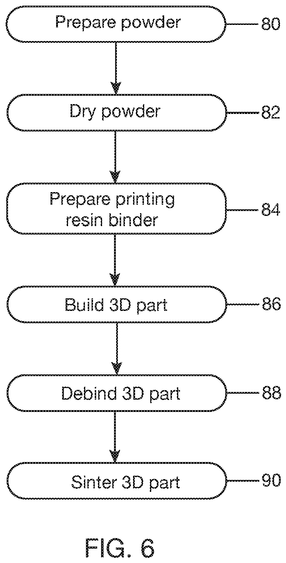

FIG. 6 illustrates an embodiment of an additive manufacturing process for making transparent 3D parts. The process of FIG. 6 involves preparing a material powder having a select particle size distribution (80). The characteristics and preparation of the material powder may be as previously described for the process of FIG. 1. The material powder having the desired particle size distribution is then dried (82). Vacuum drying, as previously described, may be used. The process includes preparing a printing resin binder (84). The printing resin binder is in liquid form so that it can be dispensed as droplets. In one embodiment, the printing resin binder is photocurable or thermocurable. The thermocurable printing resin binder includes a thermocurable resin and may further include one or more additives, such as additives to dissolve and stabilize the resin so that the printing resin binder can be dispensed as droplets. In one embodiment, a photocurable printing resin binder includes a resin, a photoinitiator, and one or more additives. The additives, such as solvents, dispersants, surfactants, and like, may be selected to allow the photocurable binder to be in a liquid form. The resin and photoinitiator may have the characteristics described above for the process of FIG. 1.

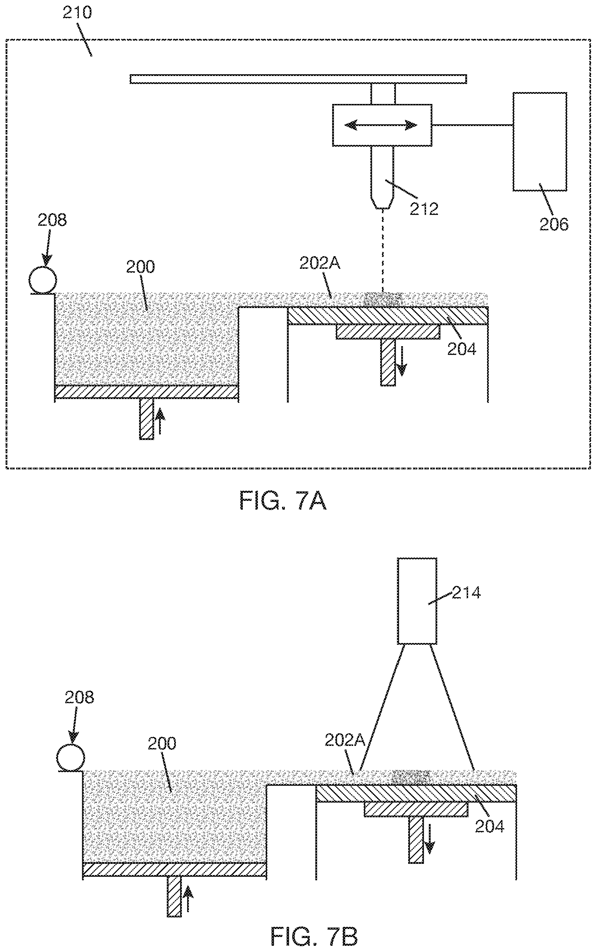

The process includes building a 3D part using the inorganic material powder and printing resin binder (86). In one embodiment, the 3D part is built using a modified drypowder 3DP™ technique. As illustrated in FIG. 7A, this may involve spreading an amount of the inorganic material powder 200 on a support 204 to form a layer of the inorganic material powder (powder layer) 202A. The powder layer 202A forms a powder bed into which droplets of the printing resin binder 206 can be deposited. The inorganic material powder 200 is preferably spread into the layer 202A under vacuum, which may optionally include vacuum degassing, to enable a transparent 3D part to be achieved. This may be accomplished by enclosing the powder spreading tool 208, the inorganic material powder 200, and the support 204 in a vacuum environment 210 during the spreading of the powder. To form a cross-sectional layer of the 3D part, droplets of the printing resin binder 206 are delivered to select areas of the powder layer 202A by a printing head (or nozzle) 212. In one embodiment, the droplets are delivered in a vacuum environment, which would prevent bubbles from becoming trapped in the powder layer 202A. The printing head 212 moves relative to the powder layer 202A in order to deliver the droplets to select areas of the powder layer 202A as determined by information contained in the build file of the 3D part for this layer. The build file may be prepared as described above for the process of FIG. 1.

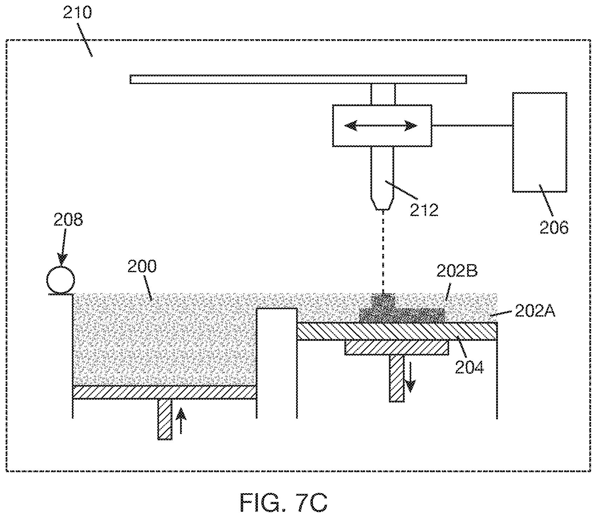

As shown in FIG. 7B, the powder layer 202A is irradiated by a UV laser 214, to cure the printing resin binder deposited in the powder layer 202A, thereby solidifying a cross-sectional layer of the 3D part in the powder layer 202A. Next, as shown in FIG. 7C, a new layer of the material powder 202B is spread on the previous layer of material powder 202A under vacuum. Droplets of the printing binder 206 are selectively delivered to the new powder layer 202B, followed by curing the printing resin binder deposited in the new powder layer 202B. This process of spreading a new layer of material powder in a vacuum environment, delivering droplets of printing resin binder to the new layer according to the information contained in the build file for this layer (preferably in a vacuum environment), and curing the deposited printing resin binder may be repeated until all the cross-sectional layers of the 3D part have been built. In FIG. 6, the process further includes debinding the completed part (88) and sintering the completed part (90). For a 3D part built from ceramic powder, sintering may include ceramming or hot isostatic pressing of the part. The debinding and sintering steps may be similar to the ones described above for the process of FIG. 1.

In the embodiments disclosed above, glass, glass-ceramic, and ceramic parts can be made from a suitable inorganic material powder using additive manufacturing. Vacuum processing is used strategically in the additive manufacturing process to avoid trapping of bubbles in the final parts. Strategic vacuum processing together with optimized debinding and sintering can be used to produce fully transparent glass, glass-ceramic, and ceramic parts.

## Claims

1. A manufacturing process for making transparent three-dimensional parts, comprising:
forming a plurality of layers (202A, 202B) of inorganic material powder (200), the layers (202A, 202B) being formed one at a time under vacuum (210), each current layer (202A, 202B) of powder (200) being in contact with a previous layer (202A, 202B) of powder (200) or with a support, wherein the inorganic material powder (200) has a select particle size distribution; and
forming a structure containing a three-dimensional object by selectively delivering droplets of a printing resin binder (206) to each current layer (202A, 202B) of the inorganic material powder (200) to form a structure containing a three-dimensional object, wherein a cross-section of the three-dimensional object is formed in the current layer (202A, 202B) of the inorganic material powder (200); and
curing the printing resin binder (206) delivered to each layer (202A, 202B) using a laser source.

2. The process of claim 1, further comprising debinding the structure to remove the printing resin binder (206) and sintering the structure to densify the structure.

3. The process of claim 2, wherein the forming the plurality of layers (202A, 202B) comprises selectively vacuum degassing the layers (202A, 202B) of powder (200).

## Patentansprüche

1. Herstellungsverfahren zum Herstellen transparenter dreidimensionaler Teile, umfassend:
Ausbilden mehrerer Schichten (202A, 202B) aus anorganischem Materialpulver (200), wobei die Schichten (202A, 202B) einzeln unter Vakuum (210) ausgebildet werden, wobei jede aktuelle Schicht (202A, 202B) von Pulver (200) in Kontakt mit einer vorherigen Schicht (202A, 202B) von Pulver (200) oder mit einem Träger steht, wobei das anorganische Materialpulver (200) eine ausgewählte Partikelgrößenverteilung aufweist; und
Ausbilden einer Struktur, die ein dreidimensionales Objekt enthält, indem selektiv Tröpfchen eines Druckharzbindemittels (206) an jede aktuelle Schicht (202A, 202B) des anorganischen Materialpulvers (200) abgegeben werden, um eine Struktur auszubilden, die ein dreidimensionales Objekt enthält, wobei ein Querschnitt des dreidimensionalen Objekts in der aktuellen Schicht (202A, 202B) des anorganischen Materialpulvers (200) ausgebildet ist; und
Härten des Druckharzbindemittels (206), das jeder Schicht (202A, 202B) unter Verwendung einer Laserquelle zugeführt wird.

2. Verfahren nach Anspruch 1, ferner umfassend das Entbinden der Struktur zum Entfernen des Druckharzbindemittels (206) und das Sintern der Struktur zum Verdichten der Struktur.

3. Verfahren nach Anspruch 2, wobei das Ausbilden der mehreren Schichten (202A, 202B) das selektive Vakuumentgasen der Schichten (202A, 202B) des Pulvers (200) umfasst.

## Revendications

1. Procédé de fabrication permettant de fabriquer des pièces tridimensionnelles transparentes, comprenant :
la formation d'une pluralité de couches (202A, 202B) de poudre de matériau inorganique (200), les couches (202A, 202B) étant formées une à la fois sous vide (210), chaque couche actuelle (202A, 202B) de poudre (200) étant en contact avec une couche précédente (202A, 202B) de poudre (200) ou avec un support, ladite poudre de matériau inorganique (200) possédant une distribution granulométrique choisie ; et
la formation d'une structure contenant un objet tridimensionnel en délivrant sélectivement des gouttelettes d'un liant de résine d'impression (206) à chaque couche actuelle (202A, 202B) de la poudre de matériau inorganique (200) pour former une structure contenant un objet tridimensionnel, une section transversale de l'objet tridimensionnel étant formée dans la couche actuelle (202A, 202B) de la poudre de matériau inorganique (200) ; et
le durcissement du liant de résine d'impression (206) délivré à chaque couche (202A, 202B) à l'aide d'une source laser.

2. Procédé selon la revendication 1, comprenant en outre le déliantage de la structure pour éliminer le liant de résine d'impression (206) et le frittage de la structure pour densifier la structure.

3. Procédé selon la revendication 2, ladite formation de la pluralité de couches (202A, 202B) comprenant le dégazage sélectif sous vide des couches (202A, 202B) de poudre (200).
